# EUROPEAN PATENT SPECIFICATION

(11) **EP 2 466 316 B1**
(45) Date of publication and mention of the grant of the patent: **25.11.2015**
(21) Application number: 10195180.4
(22) Date of filing: 15.12.2010
(51) Int. Cl.: G01N 35/08, G01N 35/10

(54) **Fluidic systems, fluid containers and processes for washing fluid lines**
Fluidsysteme, Fluidbehälter und Verfahren zum Waschen von Fluidleitungen
Systèmes fluidiques, conteneur de fluide et procédés de lavage de conduits de fluide

(43) Date of publication of application: 20.06.2012
(73) Proprietor: F.Hoffmann-La Roche AG, 4070 Basel (CH); Roche Diagnostics GmbH, 68305 Mannheim (DE)
(72) Inventor: Glauser, Michael, CH-8134 Adliswil (CH); Jaeggi, Rainer D., CH-8800 Thalwil (CH); Hein, Heinz-Michel, CH-6333 Huenenberg See (CH)
(74) Representative: Gebauer, Dieter Edmund

(56) References cited:
- WO-A1-97/03347
- US-A- 4 318 884
- US-A- 4 865 811
- US-A1- 2006 257 263
- US-A1- 2008 317 627
- US-A1- 2009 176 314

## Description

### TECHNICAL FIELD

The present invention is mainly in the field of clinical analysis and medical diagnostics and more particularly relates to fluidic systems, fluid containers and processes for washing fluid lines of a fluidic system. The invention is further pertained with fluid containers for connection to reagent lines of fluidic systems.

### BACKGROUND OF THE INVENTION

In recent years, a strong demand for the automated analysis of liquid samples can be observed which is primarily due to the fact that there is an ongoing increase in the number of clinical analyses. Sample analysis typically involves combining the samples with one or more reagents to determine absence/presence and optionally concentration of one or more analytes contained therein.

Commercially available analyzers typically use pipetting robots for combining samples and reagents which normally have many moving parts which as being moved fast and nearly continuously may require frequent maintenance and replacement operations. Otherwise, conventional analyzers have limited flexibility with regard to the type of the analytical method and can only be operated with comparably low precision due to the variability of pipetting operations. Since reagents are exposed to the ambient air, they may have a reduced shelf life.

Due to low sample consumption, fast analysis times and high sample throughput, many efforts have been made to develop integrated fluidic systems for the automated analysis of liquid samples. The non-published European patent application EP 09167520.7 describes an integrated fluidic system for the automated analysis of liquid samples.

US2009/0176314 discloses a reagent cartridge which can be exchangeably inserted into an analyzer and having a plurality of reagent bags furnished with connecting lines, each of which may optionally be connected to an input device of the analyzer. Each reagent bag has an analyzer-controlled multi-way valve with at least two valve positions at the point where the respective connecting line departs, such that the first valve position opens a fluid path between the connecting line and the reagent bag, while the second valve position closes off the reagent bag and opens a fluid path between a ventilation source, e.g. ambient air, and the connecting line. The connecting lines of the reagent bags departing from the multi-way valve open directly into a common rail or a collector valve.

It is an object of the invention to provide efficient processes for washing fluid lines of integrated fluidic systems for the automated combining of liquid samples with reagents. This object is met by washing processes and systems for combining liquid samples with reagents according to the independent claims. Preferred embodiments of the invention are given by the features of the dependent claims.

### SUMMARY OF THE INVENTION

As used herein, the term "sample" generally relates to biological and non-biological (chemical) fluids. Biological fluids such as body fluids like blood, serum, urine, saliva and cerebrospinal fluid can, e.g., be subject to analyses and assays in medical and pharmaceutical research and clinical diagnosis. Non-biological fluids can, e.g., be subject to chemical analyses and assays, e.g., drug interaction screening, environmental analysis and identification of organic substances. Samples can also be pre-processed fluids such as extracts of body fluids.

As used herein, the term "reagent" generally relates to any liquid fluid. In the more strict sense of the term, a reagent is a liquid solution containing a reactant such as a compound or agent capable of binding to or transforming one or more analytes present in a liquid sample. Accordingly, reagents may contain reactants for reaction with one or more analytes contained in the sample. Examples of reactants are enzymes, enzyme substrates, conjugated dyes, protein-binding molecules, nucleic acid binding molecules, antibodies, chelating agents, promoters, inhibitors, epitopes, antigens and catalysts. Reagents, however, can also be non-reacting fluids such as buffers, solvents and diluting fluids.

As used herein, the term "fluid line" or "line" generally relates to a flow channel configured for conveying liquid fluids and optionally gaseous fluids.

As used herein, the term "connected" generally relates to a fluidic connection which can be direct or indirect. Fluid lines connected with respect to each other can be equipped with flow regulating means such as fluid valves.

As used herein, the term "fluid valve" or "valve" generally relates to controllable or non-controllable means for regulating fluid flow. Controllable valves can be brought into one of two distinct states: a valve open state in which liquid fluid can pass through the valve and a valve closed state in which liquid fluid is inhibited to pass the valve. Specifically, valves can, e.g., be configured as freeze-thaw valves which can selectively be brought into one of three distinct states with respect to liquid and gaseous fluids: a valve open state in which both liquid and gaseous fluids can pass through the valve, a first valve closed state in which gaseous fluid can pass through the valve but liquid fluid is blocked to pass the valve, and a second valve closed state in which both liquid and gaseous fluids are blocked to pass the valve. If not specified in more detail, a "valve closed state" of the freeze-thaw valve can be the first or the second valve closed state. Freeze-thaw valves are well-known to those of skill in the art and in the patent literature, e.g., are described in US patent application No. 2003/0094206 A1 and US-Patent No. 6,311,713 B1.

As used herein, the term "positive pressure" relates to pressures higher than atmospheric (ambient) pressure and the term "negative pressure" relates to pressures smaller than atmospheric pressure.

According to the invention, a new process for washing fluid lines of a fluidic system for combining liquid samples with one or more reagents is proposed. The fluidic system comprises at least one main line connected to one or more reagent lines for feeding reagents to the main line, at least one sample intake for intaking samples, e.g., into the main line, and at least one pressure actuator for generating a positive or negative pressure in the fluid lines. In the system, each of the reagent lines is connectable to one reagent container or a cleaning container in an exchangeable manner by means of a fluidic connector. In some embodiments, in the fluidic system, each of the fluid lines is being operatively coupled to at least one controllable fluid valve, adapted to inhibit or release fluid flow in the fluid line. In some embodiments, each of the reagent lines includes at least one controllable line valve.

According to the invention, the process for washing fluid lines comprises the following steps of one or more procedures selected from the group of procedures:
According to a first procedure (I), the process for washing fluid lines of the fluidic system comprises steps of drawing wash fluid from a wash fluid reservoir connected to the main line via a fluidic connection other than (different from) said reagent lines into the main line and discharging wash fluid into a waste compartment for receiving waste fluid of a cleaning container connected to at least one reagent line by the fluidic connector. In some embodiments, the process includes a step of releasing fluid flow between the main line and the reagent line connected to the cleaning container by means of a controllable fluid valve which is being operatively coupled to the reagent line so as to allow wash fluid to be discharged into the waste compartment of the cleaning container. In some embodiments, the process comprises a step of connecting the cleaning container to at least one reagent line by means of the fluidic connector. In some embodiments, the process comprises a step of disconnecting at least one reagent container from a reagent line and connecting the cleaning container to the reagent line by means of the fluidic connector, i.e., replacing at least one reagent container by the cleaning container. In some embodiments, an empty reagent container is used as cleaning container.

According to a second procedure (II), the process for washing fluid lines of the fluidic system comprises steps of drawing wash fluid from at least one fluid compartment containing wash fluid of at least one cleaning container connected to at least one reagent line into the main line and discharging wash fluid from the main line into at least one waste compartment for receiving waste fluid of the cleaning container. In some embodiments, the process includes a step of releasing fluid flow between the main line and the reagent line to which the cleaning container is connected by means of a controllable fluid valve which is being operatively coupled to the reagent line so as to allow wash fluid to be drawn from the fluid compartment into the main line and to be discharged from the main line into the waste compartment. In some embodiments, the process comprises a step of connecting the cleaning container to at least one reagent line. In some embodiments, the process comprises a step of disconnecting at least one reagent container from a reagent line and connecting the cleaning container to the reagent line, i.e., replacing at least one reagent container by the cleaning container. In some embodiments, wash fluid is drawn from said at least one fluid compartment into said main line until the wash fluid compartment is empty and used wash fluid is discharged into the at least one empty fluid compartment to be used as waste compartment for receiving waste fluid.

According to a third procedure (III), the process for washing fluid lines of the fluidic system comprises steps of drawing wash fluid from at least one fluid compartment containing wash fluid of a cleaning container connected to at least one first reagent line into said main line and discharging wash fluid from said main line into at least one waste compartment for receiving waste fluid of a cleaning container connected to at least one second reagent line being different from said at least one first reagent line. In some embodiments, the process includes a step of releasing fluid flow between the main line and the first cleaning container container-connected and second cleaning container-connected reagent lines by means of fluid valves being operatively coupled thereto so as to allow that wash fluid can be drawn from the fluid compartment into the main line and that wash fluid can be discharged from the main line into the waste compartment. In some embodiments, the process comprises a step of connecting the first cleaning container to at least one first reagent line and to connect the at least one second cleaning container to at least one second reagent line. In some embodiments, the process comprises a step of disconnecting at least two reagent containers from reagent lines and connecting the first and second cleaning containers to these reagent lines, i.e., to replace the reagent containers by the first and second cleaning containers.

In some embodiments of the process according to the second and third procedures, the process comprises steps of drawing wash fluid from a wash fluid reservoir connected to the main line via a fluidic connection other than (different from) the reagent lines into the main line and discharging wash fluid into at least one waste compartment of the cleaning container.

In some embodiments of the process according to the second and third procedures, plural wash fluids different with respect to each other contained in plural fluid compartments of one or more cleaning containers are successively drawn into the main line.

In some embodiments of the process according to the first to third procedures, the process comprises a step of discharging wash fluid through the sample intake. Specifically, in some embodiments, the process includes a step of releasing fluid flow between the main line and the sample intake by means of a fluid valve operatively coupled to the sample intake so as allow that wash fluid can be discharged from the main line through the sample intake.

In some embodiments of the process according to the first to third procedures, at least one reagent container connected to one reagent line is automatically replaced by one cleaning container.

According to a fourth procedure (iv), the process comprises the following steps of connecting at least one cleaning container provided with at least one fluid compartment containing wash fluid to at least one reagent line, drawing wash fluid from said fluid compartment into said main line and discharging wash fluid from said main line through a fluid waste port of the main line.

According to the invention, a new fluidic system for combining liquid samples with one or more reagents according to claim 5, first alternative is proposed.

The fluidic system can, e.g., be used for analyzing liquid samples. Specifically, in some embodiments, the fluidic system is being adapted for analyzing liquid samples. Although the fluidic system is particularly suitable in (bio-)chemical applications including in-vitro diagnostics it will also be useful with a wide variety of non-(bio-)chemical applications. In some embodiments, the fluidic system can be used for diagnostic assays such as clinical-chemistry assays and immunoassays. Typical diagnostic assays comprise the qualitative and/or quantitative analysis of analytes such as albumin, ALP (alkaline phosphatase), ALT (alanine aminotransferase), ammonia, amylase, aspartat, aminotransferase, bicarbonate, bilirubin, calcium, cardiac markers, cholesterol, creatinine kinase, D-dimer, ethanol, g-glutamyltransferase, glucose, HBA1c (haemoglobin A1c), HDL-cholesterol, iron, lactate, lactate dehydrogenase, LDL-cholesterol, lipase, magnesium, phosphorus inorganic, potassium, sodium, total protein, triglycerides, UREA, and uric acid. This list is not exhaustive.

In some embodiments of the fluidic system, each of the fluid lines is being coupled to at least one controllable fluid valve, adapted to inhibit or release fluid flow in the fluid line. Specifically, in some embodiments, each of the fluid lines includes one fluid valve. The system yet further comprises at least one pressure actuator which is being adapted for generating a positive or negative pressure in the fluid lines. Furthermore, the system comprises one or more reagent containers containing reagents, wherein each of the reagent containers is being connected to one reagent line by one fluidic connector. The system further comprises at least one cleaning container provided with at least one waste compartment for receiving waste fluid connected to at least one reagent line by the fluidic connector. The system yet further comprises a controller for controlling the activity of components which require control such as the pressure actuator and fluid valves, wherein the controller is set up to control activity of the pressure actuator and fluid valves in a manner to draw wash fluid from the wash fluid reservoir into the main line and to discharge wash fluid from the main line into the waste compartment.

According to the invention, another new fluidic system for combining liquid samples with one or more reagents according to claim 5, second alternative is proposed. In some embodiments of the fluidic system, each of the fluid lines is being coupled to at least one controllable fluid valve, adapted to inhibit or release fluid flow in the fluid line. Specifically, in some embodiments, each of the fluid lines includes the fluid valve. The system yet further comprises at least one pressure actuator which is being adapted for generating a positive or negative pressure in the fluid lines. Furthermore, the system comprises one or more reagent containers containing reagents, wherein each of the reagent containers is being connected to one reagent line by one fluidic connector. The system further comprises at least one cleaning container provided with at least one waste compartment for receiving waste fluid and at least one wash compartment containing wash fluid connected to at least one reagent line. The system yet further comprises a controller set up to control activity of the pressure actuator and fluid valves in a manner to draw wash fluid from the wash compartment into the main line and to discharge wash fluid from the main line into the waste compartment. In some embodiments of the fluidic system the main line is connected to a wash fluid reservoir containing wash fluid and wherein the controller is set up to draw wash fluid from the wash fluid reservoir into the main line and to discharge wash fluid from the main line into at least one waste compartment. In some embodiments of the above-described fluidic systems, the cleaning container comprises plural fluid compartments containing wash fluids different with respect to each other, wherein the controller is set up to selectively draw said wash fluids into the main line.

In some embodiments of the above-described fluidic systems, the main line is connected to a waste fluid port, wherein the controller is set up to discharge wash fluid through the waste fluid port.

In some embodiments of the above-described fluidic systems, the system comprises an automated positioning mechanism, adapted for positioning individual containers, wherein the controller is set up to replace at least one reagent container connected to one reagent line by the cleaning container.

The above-described various aspects and embodiments of the invention may be used alone or in any combination thereof without departing from the scope of the invention as defined by the claims.

### BRIEF DESCRIPTION OF THE DRAWINGS

Other and further objects, features and advantages of the invention will appear more fully from the following description. The accompanying drawings, which are incorporated in and constitute a part of the specification, illustrate preferred embodiments of the invention, and together with the general description given above and the detailed description given below, serve to explain the principles of the invention. In the drawings, similar structures are referred to by like numerals throughout the various embodiments.
- FIG. 1: is a schematic drawing illustrating exemplary embodiments of the fluidic system of the invention;
- FIG. 2: is a schematic drawing illustrating exemplary embodiments of a cleaning container connected to one reagent line;
- FIGS. 3A-3B: are schematic drawings illustrating exemplary embodiments for connecting each of a cleaning container and a reagent container to one reagent line;
- FIGS. 4A-4B: are schematic drawings illustrating exemplary embodiments of the fluidic connector;
- FIGS. 5A-5C: are schematic drawings illustrating exemplary embodiments of the cleaning container;
- FIGS. 6A-6B: are schematic drawings illustrating different exemplary scenarios for washing fluid lines of the fluidic system;
- FIG. 7: is a schematic drawing illustrating another exemplary scenario for washing fluid lines of the fluidic system;
- FIG. 8: is a schematic drawing illustrating another exemplary scenario for washing fluid lines of the fluidic system;
- FIGS. 9A-9C: are workflow diagrams illustrating various exemplary wash processes;
- FIG. 10: is a schematic perspective view of an exemplary embodiment of the fluidic system of the invention.

### DETAILED DESCRIPTION OF THE INVENTION

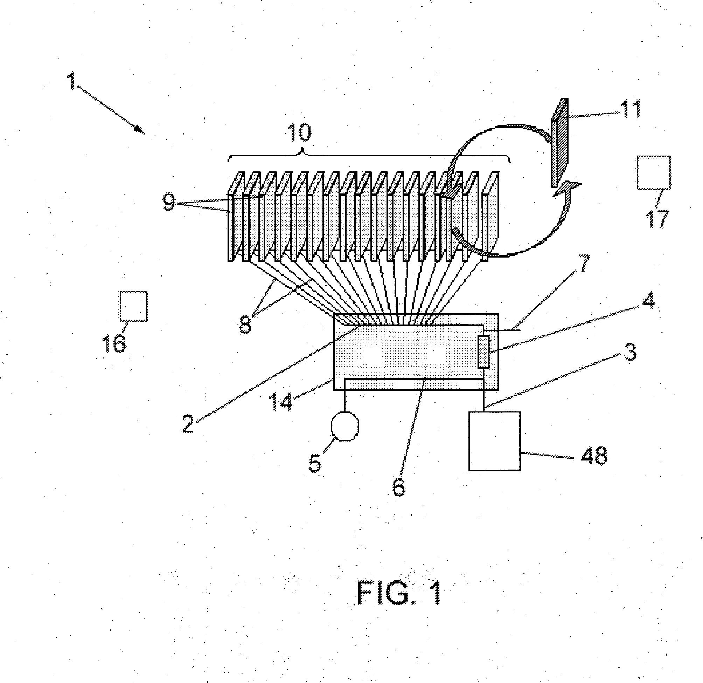

By way of illustration, specific exemplary embodiments in which the invention may be practiced are described. With particular reference to FIG. 1, exemplary embodiments of the fluidic system according to the invention, generally referred to at reference numeral 1, are explained.

Accordingly, in some embodiments, the fluidic system 1 configured as flow-through system includes a processing unit 14 provided with a main line 2 for conveying liquid fluids which, in some embodiments, freely opens into a waste fluid container 48 for discharging waste fluid. The fluidic system 1 can, e.g., be part of a diagnostic instrument, e.g., for clinical chemistry, immunochemistry, coagulation. As illustrated, the main line 2 includes a (flow-through) receiving chamber 4 for receiving liquid fluids. While only one receiving chamber 4 is illustrated for the purpose of illustration only, those of skill in the art will appreciate that more than one receiving chamber 4, e.g., in parallel arrangement with respect to each other, can be envisaged according to the specific demands of the user.

In some embodiments, the receiving chamber 4 is operatively coupled to one or more detecting means related to one or more analytical methods. Specifically, in some embodiments, the receiving chamber 4 is operatively coupled to an ion-selective electrode (ISE), a biosensor such as an enzymatic-electrochemical detector, an electro-chemoluminescence detector (ECL), an optical detector, e. g., embodied as photometer to detect light emitted from reaction products contained in the receiving chamber 4 and the like (not shown).

In some embodiments, a pressure actuator 5 such as a pump is connected to the main line 2 via connecting line 6 for generating a positive or negative pressure therein. In some embodiments, the pressure actuator 5 is adapted for pumping gaseous fluids. In some embodiments, the pressure actuator 5 is adapted for pumping liquid and gaseous fluids. The pressure actuator 5 can be embodied as continuous or discontinuous pressure actuator such as a pump of the membrane pump type, syringe pump type, rotary displacement pump type and bellow pump type. While only one pressure actuator 5 is illustrated for the purpose of illustration only, those of skill in the art will appreciate that more than one pressure actuator 5 can be envisaged according to the specific demands of the user.

In some embodiments, one sample intake 7 is connected to the main line 2 for feeding samples to the main line 2 and receiving chamber 4, respectively. In some embodiments, the sample intake 7 is a metallic needle. Accordingly, samples can be aspirated via the sample intake 7 into the main line 2, e.g., from a sample tube (not illustrated) by action of the pressure actuator 5. While only one sample intake 7 is illustrated for the purpose of illustration only, those of skill in the art will appreciate that more than one sample intake 7 can be envisaged according to the specific demands of the user.

In some embodiments, in the fluidic system 1, a plurality of reagent lines 8 is connected to the main line 2 for feeding one or more reagents to the main line 2 and receiving chamber 4, respectively. In some embodiments, each of the reagent lines 8 is connected to one reagent container 9, e.g., configured as cassette containing reagent by means of one fluidic connector 15 (not further detailed in FIG. 1). Accordingly, a set 10 of plural reagent containers 9 containing one or more reagents are connected to the reagent lines 8. The reagents contained in the reagent containers 9 can be the same, similar or different with respect to each other.

As illustrated in FIG. 1, in some embodiments, the fluidic system 1 further includes at least one cleaning container 11 provided with at least one fluid compartment 12 containing wash fluid and/or at least one waste compartment 13 for receiving used wash fluid, i.e., waste fluid. While only one cleaning container 11 is illustrated for the purpose of illustration only, those of skill in the art will appreciate that more than one cleaning container 11 can be envisaged according to the specific demands of the user.

While not illustrated, in some embodiments of the fluidic system 1, each of the reagent lines 8 is operatively coupled to at least one controllable fluid valve, adapted for inhibiting and releasing fluid flow in the reagent line 8. In some embodiments, the fluid valves are included in the reagent lines 8, e.g., adjacent the main line 2. Furthermore, in some embodiments of the fluidic system 1, the sample intake 7 is operatively coupled to at least one controllable fluid valve, adapted for inhibiting and releasing fluid flow in the sample intake 7.

With continued reference to FIG. 1, in some embodiments, the fluidic system 1 further includes an automated positioning mechanism 17 such as an automated gripping arm adapted for positioning individual containers 9, 11. Since those of skill in the art are aware of the specific function and construction of such positioning mechanism it is not necessary to elucidate it herein.

As illustrated, in some embodiments, the fluidic system 1 further includes a controller 16 set up to control washing fluid lines of the fluidic system 1. In some embodiments, the controller 16 is a programmable logic controller running a computer-readable program provided with instructions to perform operations in accordance with a process plan. The controller 16 is electrically connected to the system components which require control and/or provide information. Specifically, the controller 16 is electrically connected to the pressure actuator 5, the automated positioning mechanism 17 and the various controllable fluid valves (not illustrated). Specifically, the controller 16 is set up to control intake of samples and reagents by generating a negative pressure in the main line 2. Otherwise, as illustrated in FIG. 1, in some embodiments, the controller 16 is set up to control the positioning mechanism 17 in a manner to disconnect one reagent container 9 from a reagent line 8 and to connect one cleaning container 11 to the reagent line 8, that is to say, to replace one reagent container 9 with the cleaning container 11.

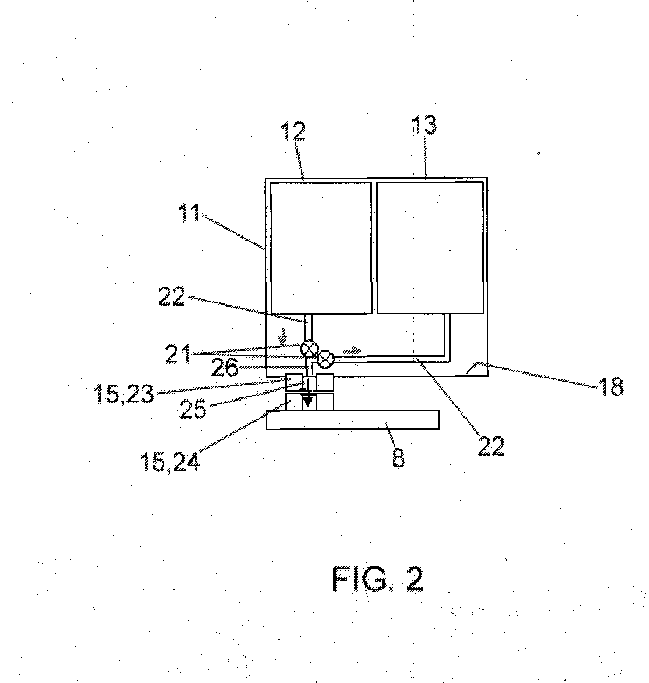

With particular reference to FIG. 2, in some embodiments, the cleaning container 11 comprises a housing 18 accommodating at least one fluid compartment 12 containing wash fluid and at least one empty waste compartment 13 for receiving waste fluid. The fluid compartment 12 is separated from the waste compartment 13. Specifically, in some embodiments, the fluid and waste compartments 12, 13 are connected to a first connector portion 23 by container ducts 22 unifying at junction 26. As illustrated, each of the container ducts 22 includes a container valve 21. In some embodiments, the container valve 21 is a non-controllable one-way check-valve, adapted for releasing the fluid flow in one direction and blocking the fluid flow in the reverse direction. As illustrated, the container valve 21 operatively coupled to the fluid compartment 12 releases fluid flow towards the reagent line 8 and blocks fluid flow in the reverse direction. Otherwise, the container valve 21 operatively coupled to the waste compartment 13 blocks fluid flow towards the reagent line 8 and releases fluid flow into the waste compartment 13. The first connector portion 23 can be coupled to a second connector portion 24 of the reagent line 8 for forming the fluidic connector 15 enabling fluid flow through a connector duct 25.

The cleaning container 11 of FIG. 2 having an integrated wash fluid reservoir and an empty space for collecting used wash fluid allows plural washing cycles, each of which involving sucking out wash fluid from the fluid compartment 12 and pushing the used (contaminated) wash fluid back into the waste compartment 13. The combined cleaning container 11 has many advantages. One major advantage is that the wash fluid can be taken back into its origin so that no additional waste has to be handled in the fluidic system 1. In the case of configuring the fluidic system 1 as disposable analytical unit this can be of certain interest since only solid waste is generated on the analytical part and no fluid waste. The fluid compartment 12 contains a wash fluid such as a cleaning solution, e.g., sodium hydroxide solution, hydrochloric acid, sodium hypochlorite, a detergent solution, an enzyme solution, or similar chemicals. The cleaning container 11 can, e.g., be configured as re-usable cassette intended for multiple use allowing the fluid compartment 12 to be refilled with wash fluid and the waste compartment 13 to be emptied. Alternatively, the cleaning container 11 can be configured as disposable subject intended for single-use only. The cleaning container 11 can, e.g., be made of a chemically inert, cheap polymeric material such as high-density polyethylene (HDPE) and polypropylene (PP).

With continued reference to FIG. 2, in some alternative embodiments, instead of at least one fluid compartment 12 and at least one waste compartment 13, the cleaning container 11 contains at least one fluid compartment 12 filled with wash fluid but no waste compartment 13. In some yet alternative embodiments, instead of at least one fluid compartment 12 and at least one waste compartment 13, the cleaning container 11 contains at least one waste compartment 13 for receiving waste fluid but no fluid compartment filled with wash fluid. The various compartments can, e.g., be embodied as collapsible or expandable bags or pouches.

With yet continued reference to FIG. 2, the cleaning container 11 can readily be connected to one reagent line 8 by the fluidic connector 15 comprised of the first and second connector portions 23, 24. Due to a non-permanent connection of the cleaning container 11, it can easily be removed from the reagent line 8 without the need of using tools.

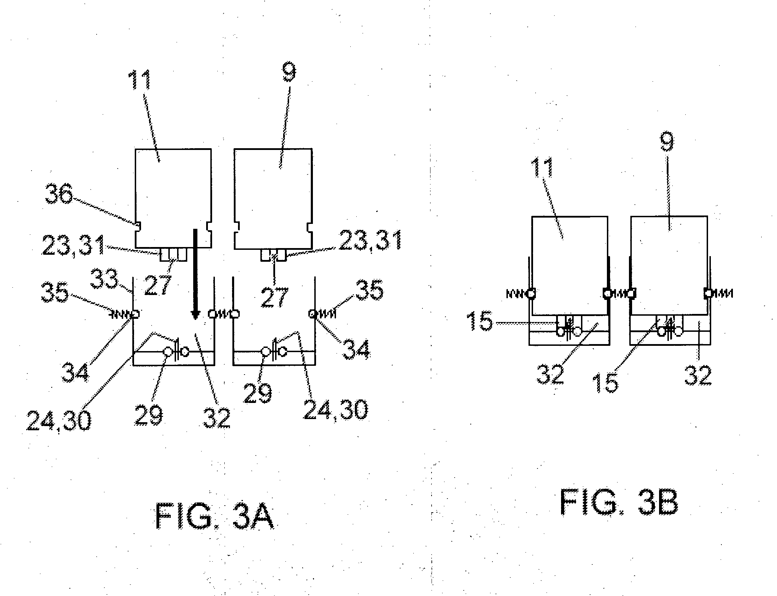

With particular reference to FIG. 3A, in some embodiments, the first connector portion 23 includes a septum 27 located adjacent an outlet or fluid opening 28 of the connector duct 25 which, in some embodiments, as illustrated, is a hollow-cylindrical duct formed by protrusion 31 fixed to housing 18. As illustrated, in some embodiments, the protrusion 31 is configured as a ring-like pedestal. The non-broken septum 27 closes the connector duct 25. The second connector portion 24 of the reagent line 8 comprises a sharp protruding element 30 such as a needle which when approaching the cleaning container 11 can penetrate and break the septum 27 so as to open the connector duct 25.

As illustrated in FIGS. 3A and 3B, left drawings, in some embodiments, the cleaning container 11 can be mounted by means of a slot 32 formed by parallel walls 33. Specifically, the walls 33 of one slot 32 are provided with two opposing balls 34 pre-tensioned by compression springs 35 and arranged to snap into recesses 36 of the housing 18 so that the cleaning container 11 can be releasably secured within the slot 32. In secured position, the protruding element 30 penetrates the septum 27 and dips into the connector duct 25 until the protrusion 31 abuts against a gasket 29 for sealing the connector duct 25. Those of skill in the art will appreciate that the illustrated catching mechanism is only an exemplary mechanism for fixing the cleaning container 11 in the slot 32 and that any other geometry and/or fixing mechanism such as a magnetic fixation can be envisaged according to the specific demands of the user.

With particular reference to FIGS. 3A and 3B, right drawings, illustrating mount of a reagent container 9 by the fluidic connector 15, in some embodiments, the first connector portion 23 except for the position of septum 27 and outer dimensions of the reagent container 9 are similar to the cleaning container 11. Accordingly, any reagent container 9 connected to one reagent line 8 by fluidic connector 15 can readily be replaced with the cleaning container 11.

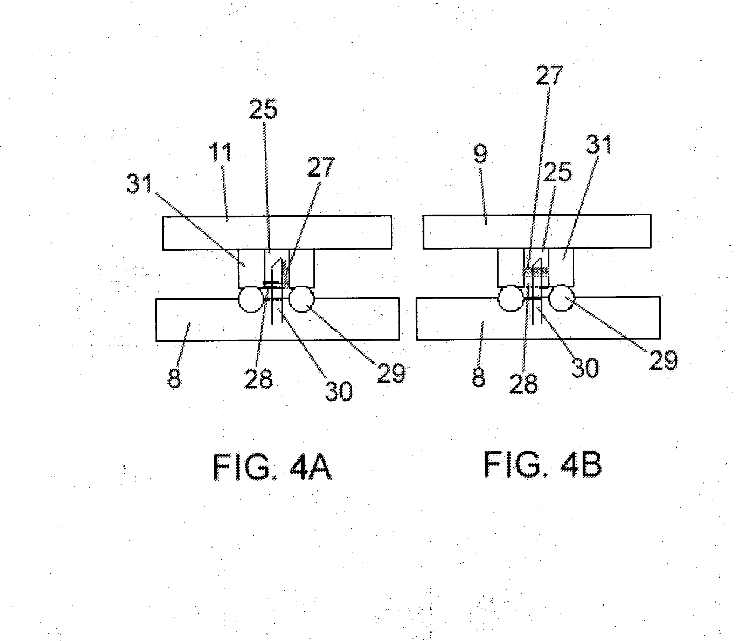

With continued reference to FIGS. 3A and 3B, right drawings, and specific reference to FIGS. 4A and 4B illustrating an enlarged detail of the fluidic connector 15, septum 27 of the cleaning container 11 is arranged nearer to the fluid opening 28 of the connector duct 25 than septum 27 of the reagent container 9. Specifically, contrary to the reagent container 9, in the cleaning container 11, septum 27 is mounted in the lowest level thereof. Accordingly, complete washing of the protruding element 30 and the whole connection area is possible. In other words, the whole connection area till gasket 29 is washable.

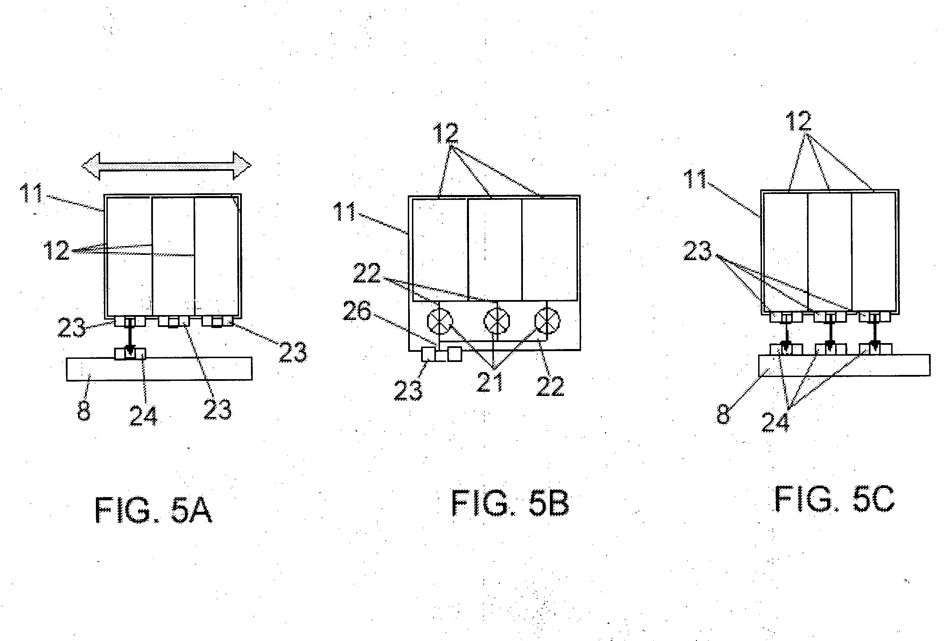

With particular reference to FIGS. 5A to 5C, another variant of the cleaning container 11 is explained. Accordingly, the cleaning container 11 comprises plural fluid compartments 12 containing wash fluid which are fluidically separated with respect to each other to prevent mixing of the wash fluids. While a number of three compartments 12 is shown for the purpose of illustration only, those of skill in the art will appreciate that the cleaning container 11 can comprise a smaller or larger number of fluid compartments 12 according to the specific demands of the user. In some embodiments, the wash fluids contained in the various fluid compartments 12 are different with respect to each other configuring the cleaning container 11 as "multi-wash fluid container".

As illustrated in FIG. 5A, in some embodiments, each of the fluid compartments 12 is connected to an individual first connector portion 23, each of which can be coupled to one second connector portion 24 of one reagent line 8. Hence, the fluid compartments 12 of the cleaning container 9 can selectively (alternatively) be connected to one reagent line 8 requiring the cleaning container 11 to be relatively moved with respect to the reagent line 8. In some embodiments, the controller 16 is set up to control activity of the positioning mechanism 17 in a manner to automatically move the cleaning container 11 to successively connect the various fluid compartments 11 to the one reagent line 8. Alternatively, the cleaning container 11 can be manually moved.

As illustrated in FIG. 5B, in some alternative embodiments, the fluid compartments 12 share one first connector portion 23 which can be coupled to one second connector portion 24 of one reagent line 8. Specifically, each fluid compartment 12 is connected to the one first connector portion 23 by means of an individual container duct 22, each of which including a container valve 21. In some embodiments, the container valve 21 is configured as controllable fluid valve controlling fluid flow in the container duct 22. The container ducts 22 unify in junction 26. Accordingly, the wash fluids can selectively (successively) be drawn out of the cleaning container 11 by operating the respective container valve 21. In some alternative embodiments, the container valves 21 are configured as "once-open valves" which can break by pressure to be permanently open. In some embodiments, the container valves are opened one after the other, e.g., in a serial manner to successively draw wash fluid out of the cleaning container 11.

As illustrated in FIG. 5C, in some yet alternative embodiments, each of the fluid compartments 12 is connected to an individual first connector portion 23 which are arranged in a manner to be simultaneously coupled to plural second connector portions 23 of plural reagent lines 8 thus configuring a "multi-slot container". Hence, all fluid compartments 12 of the cleaning container 11 can simultaneously be connected to plural reagent lines 8 without requiring the cleaning container 11 to be relatively moved with respect to the reagent lines 8. The cleaning container 11 thus allows simultaneous washing of more than one reagent line 8 at a time. This can particularly be useful in case the fluidic system 1 has not been used over a longer time period to perform maintenance or before a transportation event or during instrument service. The wash fluid flow can also be controlled by fluid valves arranged outside the cleaning container 11 allowing the cleaning container 11 to be produced at low cost.

As above-described, the cleaning container 11 can contain several wash fluids, e.g., to wash by acidic and alkaline solutions using a same cleaning container 11. Otherwise, the cleaning container 11 can contain fluids such as buffer solutions containing detergent to wash out previously used aggressive wash fluids which could possibly interfere with the following reagent. Stated more particularly, some wash fluids such as strong acids and bases can interfere with assay reagents, e.g., by (de)-protonation, pH-change or chemical reactions with some ingredients of the assay. This can probably lead to a wrong assay composition and can even cause bad or even wrong result. It, therefore, is considered important to wash out strong wash solutions by flushing the fluid lines with buffer or purified water.

With continued reference to FIGS. 5A to 5C, while not illustrated, in some alternative embodiments, at least one of the fluid compartments 12 is empty to serve as waste compartment 13.

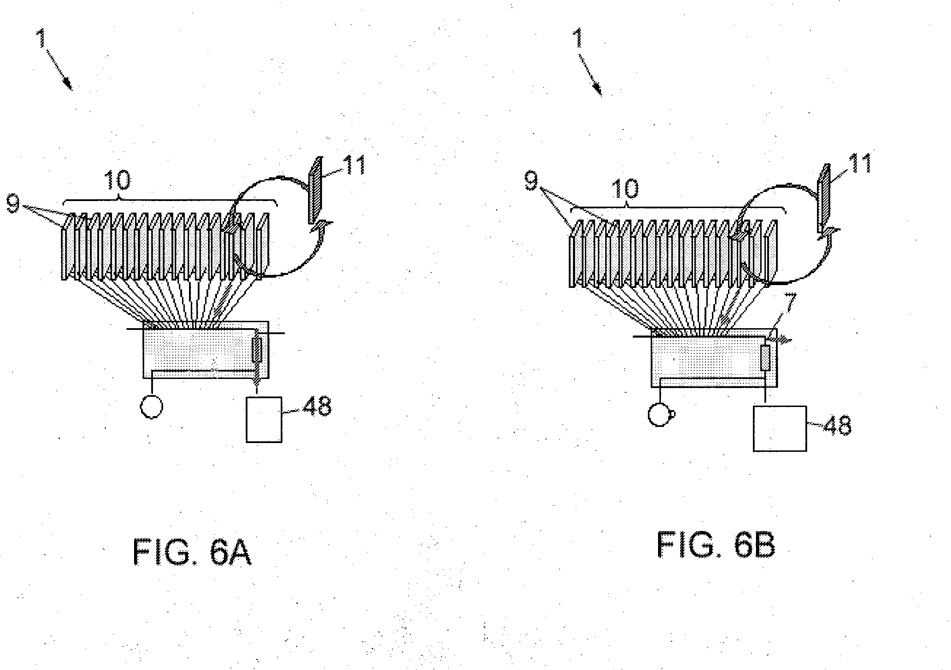

With particular reference to FIGS. 6A and 6B, different scenarios for washing fluid lines of the fluidic system 1 under control of controller 16 are explained.

Accordingly, in a first scenario, illustrated in FIG. 6A, one reagent container 9 is taken away from one reagent line 8 and replaced by one cleaning container 11. The cleaning container 11 is secured within the slot 32 and connected to the reagent line 8 by the fluidic connector 15. In some embodiments, as illustrated, the cleaning container 11 comprises at least one fluid compartment 12 filled with wash fluid configuring the cleaning container 11 as wash fluid container. A controllable line valve (not illustrated) coupled to and included in the reagent line 8 is opened to release fluid flow between the cleaning container 11 and the reagent line 8. By generating a negative pressure in the main line 2 by means of the pressure actuator 5, wash fluid can be drawn out of the fluid compartment 12 of the cleaning container 11 into the main line 2. Afterwards, the line valve is closed and positive pressure is generated to thereby discharge the wash fluid through the waste fluid port 3 into the waste container 48. In some embodiments, the washing step is repeated until the desired cleaning quality is reached or the cleaning container 11 is empty. Specifically, in some embodiments, in case the cleaning container 11 contains plural wash fluids different with respect to each other, plural wash fluids can successively be drawn out of the cleaning container 11 which then are discharged into the waste container 48 directly connected to the main line 2. Finally, the cleaning container 11 is removed and the empty slot 32 is filled with a new reagent container 9 which is connected to the reagent line 8. Alternatively, another cleaning container 11 with one or more wash fluids different from the former ones can be connected to the reagent line 8. In some embodiments, the new reagent container 9 contains a same reagent as the previous reagent container 9. In some alternative embodiments, which can be preferred, the new reagent container 9 contains a reagent different from the reagent of the previous reagent container 9, e.g., another reagent assay type. By cleaning the reagent line 8 prior to changing the reagent, cross-contamination can advantageously be prevented.

In some alternative embodiments, not illustrated, instead of being discharged into the waste container 48, the wash fluid can also be discharged into an empty waste compartment 13 of the cleaning container 11, e.g., configured as illustrated in FIG. 2. Stated more particularly, for drawing wash fluid out of the cleaning container 11, the fluid valve is opened and negative pressure is generated in the main line 2. The wash fluid can then be discharged into the waste compartment 13 of the cleaning container 11 by opening the fluid valve and generating a positive pressure in the main line 2.

With particular reference to FIG. 6B, a further alternative scenario for washing fluid lines of the liquid system 1 is illustrated. Accordingly, after replacing one reagent container 9 by the cleaning container 11 and drawing wash fluid from the cleaning container 11 into the main line 2, the wash fluid is discharged through the sample intake 7 into another waste container (not illustrated). Hence, the sample intake 7 can readily be washed by the wash fluid.

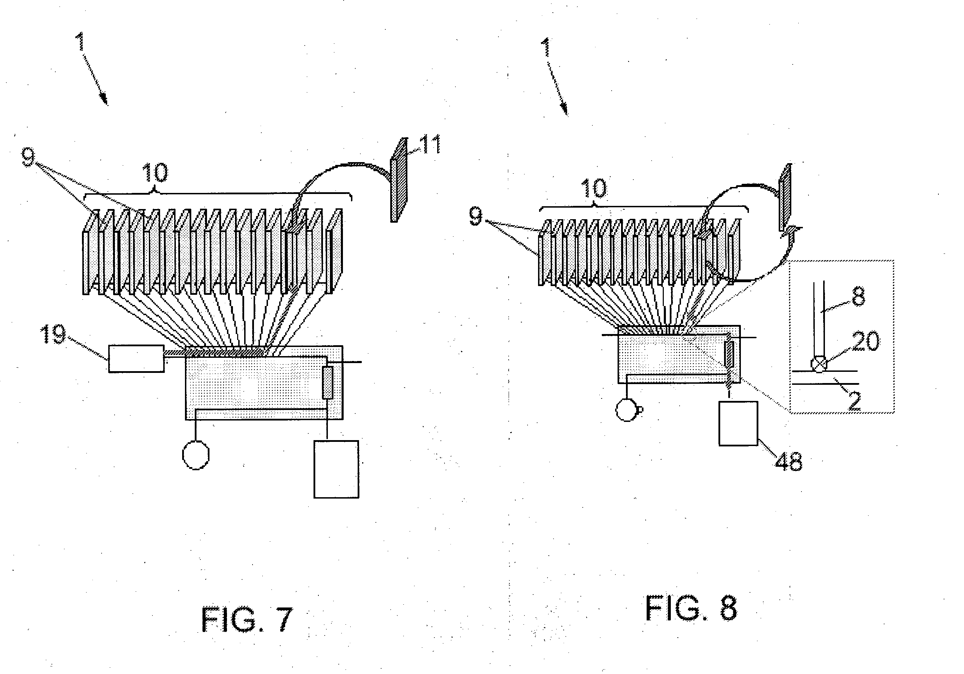

With particular reference to FIG. 7, a yet further alternative scenario for washing fluid lines of the liquid system 1 is illustrated. Accordingly, one reagent container 9 is automatically or manually replaced by one cleaning container 11 which contains an empty waste compartment 13 for receiving waste fluid but need not contain wash fluid. In the fluidic system 1, the main line 2 is connected to a wash fluid reservoir 19. The waste compartment 13 is connected to the reagent line 8 via container valve 22, e.g., configured as one-way or self-closing valve such as a septum or check-valve which prevents backflow out of the waste compartment 13. For washing, at first, a fluid valve of the reagent line 8 connected to the cleaning container 11 is closed and negative pressure is generated in the main line 2 so as to draw wash fluid into the main line 2. Afterwards, the fluid valve is opened and positive pressure is generated in the main line 2 to discharge the wash fluid into the waste compartment 13 of the cleaning container 11. Accordingly, in this scenario, the empty space of the cleaning container 11 can be filled with used wash fluid from the fluidic system 1. The washing step can be repeated until the desired cleaning quality of the liquid system 1 is obtained. Then, the cleaning container 11 is automatically or manually removed and replaced by another reagent container 9 which can contain a same, similar or different reagent with respect to the previous reagent container 9 or by another cleaning container 11. In some embodiments, the cleaning container 11 is configured as a sealed bag inside a sturdy frame, wherein the bag expands until it reaches borders of the sturdy frame while filling. In some alternative embodiments, the cleaning container 11 is an empty container with an integrated membrane which allows air to escape but holds back liquid fluid, e.g., made of polytetrafluorethylene (PTFE) tissue. In some embodiments, an empty reagent container 9 is used as cleaning container 11 provided with an empty space for receiving used wash fluid. In the latter case, the reagent container 9 can, e.g. be provided with a controllable fluid valve adapted to selectively control fluid flow in both flow directions.

With particular reference to FIG. 8, a yet further alternative scenario for washing fluid lines of the liquid system 1 is illustrated. Accordingly, one cleaning container 11 is (semi-)permanently, that is to say, for a longer time period than for one washing process, connected to one free reagent line 9. As illustrated, in some embodiments, the cleaning container 11 comprises a fluid compartment 12 containing wash fluid which can be drawn into the main line 2 to then be discharged into the waste container 48 connected to the main line 2 via a fluidic connection being different form the reagent lines 8. In some alternative embodiments, the used wash fluid is discharged from the main line 2 into an empty reagent container 9. In some yet alternative embodiments, the cleaning container 11 contains no wash fluid but only an empty waste compartment 13 for receiving used wash fluid. The wash fluid, e.g., drawn into the main line 2 from the wash fluid reservoir 19 directly connected to the main line 2, can then be discharged into the cleaning container 11. As illustrated, in some embodiments, a controllable fluid valve coupled to and included in the reagent line 8 is used to control fluid flow between the main line 2 and the cleaning container 11. The fluid valve can, e.g., be embodied as freeze/thaw valve but any other controllable fluid valve could be used.

As illustrated by the various scenarios for washing fluid lines of the fluidic system 1, by connecting the cleaning container 11 to at least one reagent line 8, cleaning of the fluidic system 1, especially of the permanent connection part from the fluidic connector 15 to the main line 2, that is to say, of the reagent lines 8 can be performed. In particular, in the case of a reagent change, e.g., a change from an assay A to an assay B, the reagent lines 8 can thoroughly be washed so as to avoid carry-over of the old assay A to the new assay B. Hence, various types of wrong results like false analyte concentrations or even false negative or false positive results can advantageously be avoided. The cleaning containers 11 can specifically be adapted to wash the reagent lines 8, e.g., by means of a highly-effective cleaner which normally is not on-board of analytical instruments. Hence, the carry-over rate can be strongly reduced to an extent that is lower than a significant amount. Therefore, use of the cleaning container 11 allows exchange of reagent containers 9 containing different reagents on one reagent line 8. In other words, reagent assays become interchangeable without changing parts of instruments, like fluid lines 2, 8 or fluidic connections 15. The fluidic system 1 no longer has fixed reagent channels. Furthermore, in case reagent lines 8 are clogged, wash fluid from the cleaning container 11 can help unblocking the fluid line by use of aggressive wash agents.

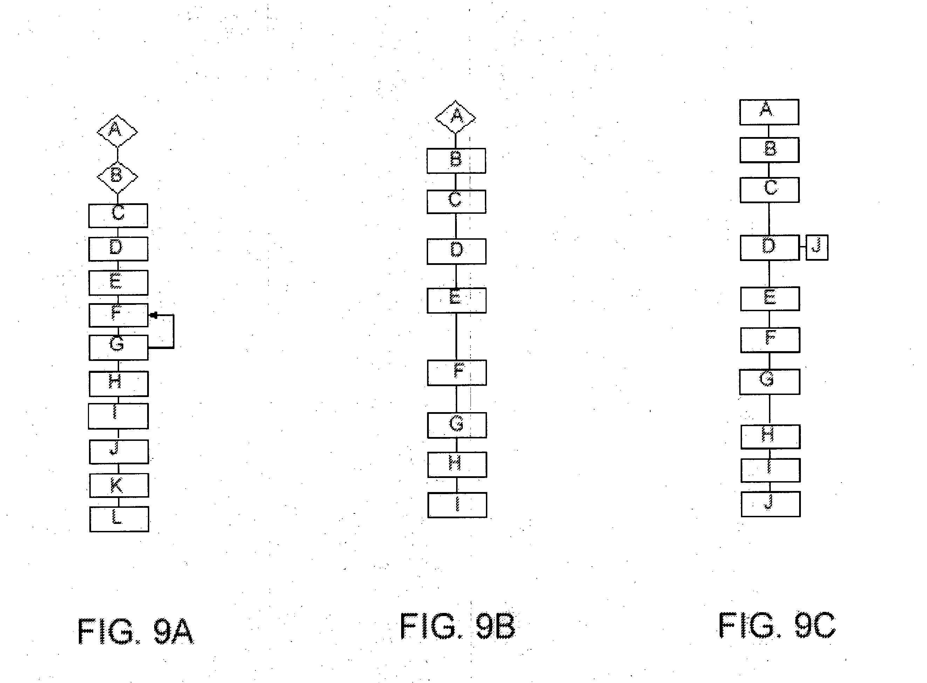

With particular reference to FIGS. 9A through 9C illustrating different workflow diagrams various exemplary wash processes are explained.

Referring to FIG. 9A, a first workflow diagram (flowchart) related to an exchange of reagent containers 9 containing different reagents in an analytical instrument is explained.

| | |
|---|---|
| A: 1 | User decisions: new assay type (parameter) should be measured on system. User requests reagent change via software GUI |
| B: 2 | Software asks for channel number (reagent slot) to be replaced. User selects slot. |
| C: Wash | Instrument washes connection channel (reagent line) with wash solution (e.g. system water). Wash solution is pushed into reagent container, which was chosen to be replaced. |
| D: Out | User takes away reagent container, either manually directly from reagent slot, or instrument transfers cassette to an output position. |
| E: Load | User loads cleaning container on the instrument. |
| F: Wash | Instrument draws out wash solution from cleaning container and cleans reagent line from residue of the exchanged reagent. |
| G: Waste | Used wash solution is wasted into instrument waste or pushed back into cleaning container (in case of wash/waste cleaning con-tainer). Last two steps are repeated until needed cleanness is reached. |
| H: Water | System water is used to clean system and reagent line from wash reagent. Water waste is pushed into system waste or cleaning container. |
| I: Drv | System empties reagent line with air which is pushed into cleaning container. |
| J: IO | User takes away cleaning container and loads new reagent container onto the instrument. |
| K: Prime | Instrument draws new reagent fluid from reagent container into reagent line. Line valve at the end of the reagent line is closed upon contact with the reagent. |
| L: End | New reagent container is loaded and ready for first usage. |

Referring to FIG. 9B, a second workflow diagram (flowchart) related to a maintenance procedure in case a reagent line has not been used for a longer time period (conditioning of the fluid paths) is explained.

| | |
|---|---|
| A: 1 | User decisions: System is powered on or conditioning is passively or actively requested. |
| B: IO | User loads cleaning container or cleaning container is loaded automatically by the system from storage. |
| C: Prime | Instrument primes reagent containers by pulling out reagent from each container into the reagent line. Flow is stopped as soon as the reagent reaches the line valve at the end of the reagent line. |
| D: Wash | The main line is washed with wash fluid from the cleaning container by pumping wash fluid through the line network. |
| E: Cond | Conditioning takes place by pumping a conditioning fluid through the system, the conditioning fluid is contained in the cleaning container (within a second compartment) or as a reagent (in form of a reagent container) provided to the system. The conditioning changes positively the surface properties of the fluid lines, e.g., reducing unwanted deposits (particles, molecules). |
| F: Water | System water is used to clean the system from wash reagent and excess conditioning fluid. Liquid waste is pushed into system waste or cleaning container. |
| G: Drv | System empties reagent line with air which is pushed into cleaning container or system waste. |
| H: IO | User takes away cleaning container or instruments moves cleaning container into storage. |
| I: End | Instrument is ready for analysis. |

Referring to FIG. 9C, a third workflow diagram (flowchart) related to harsh wash against clogs and clots is explained.

| | |
|---|---|
| A: Stop | Pressure or flow sensor detects blockage. Current instrument activity is stopped. |
| B: SW | Software localizes affected fluid path. All line valves in fluid path are opened. |
| C: Wash | Instrument washes affected fluid line with on-board wash solution (e.g. system water). Wash solution is pushed and pulled forth and back to unblock the fluid line. Used wash solution is pushed into waste container or system waste. |
| D: Water | System water is used to clean the system from wash reagent. Water waste is pushed into system waste or waste container. System water is used to test for free flow. If wash process was successful, process ends here, if not special harsh wash with external cleaning container is initiated. |
| E: WII | Instrument prompts for cleaning container with special harsh chemicals (e.g. acid or bases). |
| F: IO | User puts on special cleaning container on instrument or in-strument moves special cleaning container from cassette storage into an active position. |
| G: WIII | Wash subroutine is started as previously described. Special wash reagent is brought into contact with blocked flow channel part and actively, by pumping, or passively, by diffusion, the harsh cleaner unblocks the passage. |
| H: Water | Fluid lines are cleaned from wash chemicals with water rinsing and followed by air drying. |
| I: IO | User takes away cleaning container or cleaning container is moved by the system automatically into the storage. |
| J: End | System is ready for next step. |

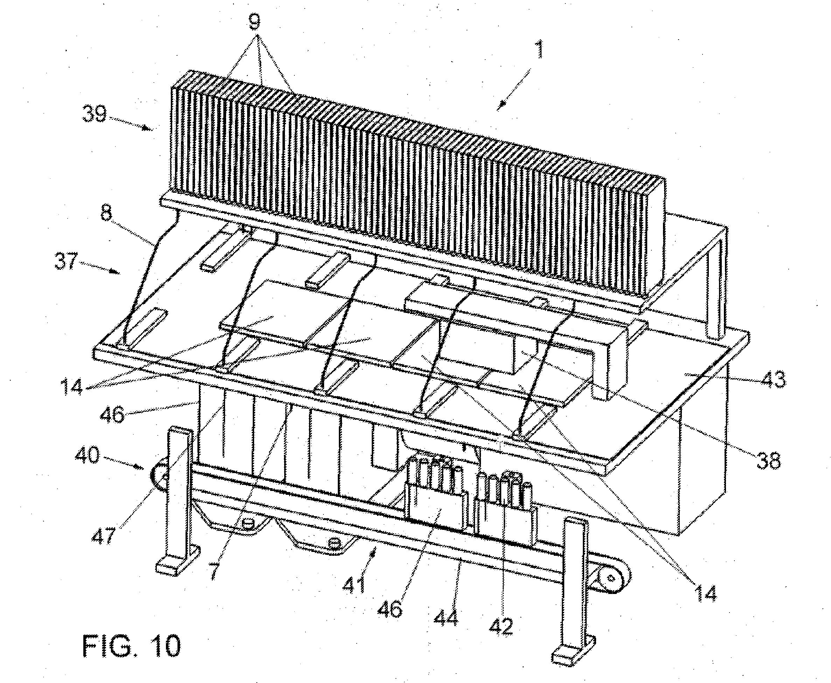

With particular reference to FIG. 10, an exemplary embodiment of the fluidic system 1 is explained. Accordingly, the fluidic system 1 includes a plurality of (flow-through) processing units 14 adapted for the processing of liquid samples, each of which being a functional and structural entity of the system 1. It further comprises an analytical unit 37 which includes an optical detector 38 which, e.g., may be embodied as photometer. The processing units 14, together with the analytical unit 37 including the optical detector 38, are dedicated to a same type of analytical method which, e.g., can be related to clinical chemistry, immune chemistry, nucleic acid testing, haematology, urinalysis and the like according to the specific demands of the user. The system 1 further comprises a reagent unit 39 provided with plural reagent containers 9, e.g., stored in a cooled compartment which contain reagents for combining with the samples. The reagents may be identical or different with respect to each other. The system 1 yet further comprises a sample unit 40 equipped with a sample tube loading mechanism 41 for loading sample tubes 42 into the system 1 and transporting the sample tubes 42 to the various processing units 14. The system 1 yet further comprises a distribution unit 43 for distributing one or more reagents provided with plural distribution (flow) channels for transporting reagents and optionally samples to each of the processing units 14. The sample tube loading mechanism 41 is embodied as belt drive including a motor-driven belt 44 adapted for transporting a plurality of sample tube racks 46 holding the sample tubes 42.

The analytical unit 37 further includes one flow-through cell 46 coupled to an instrument to detect light emitted from reaction products of sample and one or more reagents transferred to the flow-through cell 46. The optical detector 38 is coupled to a first subset of processing units 14 while the flow-through cell 46 is fluidically connected to a second subset of processing units 14 by manifold connecting channel 47. The optical detector 38 and the flow-through cell 46 are related to different types of analytical methods.

In the system 1, the distribution unit 43 is a planar body which has a plate-like shape. It is provided with a plurality of fluid lines or channels (not shown) for transporting fluids. The distribution or main channels are connected to the reagent containers 9 by means of reagent lines 8 so as to connect each of the reagent containers 9 to individual distribution channels. Each of the processing units 14 is fluidically connected to an individual sample intake 7, e.g., embodied as a metallic needle. Each of the sample intakes 7 can be dipped into the sample tubes 43, e.g., by lifting the sample tubes 43 for aspirating sample contained therein.

As illustrated in FIG. 10, the reagent unit 39, the analytical unit 37 and the sample unit 40 are arranged in different vertical heights (levels) with the reagent unit 39 being above the analytical unit 37 and the sample unit 40 being below the analytical unit 37. Accordingly, in the system 1, reagent containers 9 can be readily replaced. Each of the units of the system 1 is a functional and structural entity and, e.g., is embodied as a modular unit.

The present invention thus has many advantages over the prior art. It allows cleaning of fluid lines with a non-permanent connection of the wash agent to the fluidic system. Multiple non-permanent cleaners are available on-board. The invention especially allows cleaning from the reagent side not only the system side. Due to the possibility to clean the reagent lines, carry-over which could probably be caused by a reagent exchange can be avoided. The wash fluids can be drawn from the cleaning container into the fluidic lines and can also be discharged back to the cleaning container. Otherwise, wash fluid can be discharged via the sample intake and through the fluid waste port. Since the cleaning container has the same outer dimensions as the reagent containers, any reagent container can readily be exchanged with the cleaning container.

### Reference list

- 1: Fluidic system
- 2: Main line
- 3: Waste fluid port
- 4: Receiving chamber
- 5: Pressure actuator
- 6: Connecting line
- 7: Sample intake
- 8: Reagent line
- 9: Reagent container
- 10: Set
- 11: Cleaning container
- 12: Fluid compartment
- 13: Waste compartment
- 14: Processing unit
- 15: Fluidic connector
- 16: Controller
- 17: Positioning mechanism
- 18: Housing
- 19: Wash fluid reservoir
- 20: Fluid valve
- 21: Container valve
- 22: Container duct
- 23: First connector portion
- 24: Second connector portion
- 25: Connector duct
- 26: Junction
- 27: Septum
- 28: Fluid opening
- 29: Gasket
- 30: Protruding element
- 31: Protrusion
- 32: Slot
- 33: Wall
- 34: Ball
- 35: Spring
- 36: Recess
- 37: Analytical unit
- 38: Optical detector
- 39: Reagent unit
- 40: Sample unit
- 41: Sample tube loading mechanism
- 42: Sample tube
- 43: Distribution unit
- 44: Belt
- 45: Rack
- 46: Flow-through cell
- 47: Connecting channel
- 48: Waste container

## Claims

1. A process for automatically washing fluid lines (2, 7, 8) of a fluidic system (1) for combining liquid samples with one or more reagents, said system being provided with at least one main line (2) connected to a plurality of reagent lines (8) for feeding reagents, each of which being connectable to a reagent container (9) or a cleaning container (11) in an exchangeable manner by a fluidic connector (15), at least one sample intake (7) for intaking samples and at least one pressure actuator (5) for generating a positive or negative pressure in said fluid lines, said process comprising the steps of one or more procedures selected from the group of procedures consisting of
procedure I: drawing wash fluid from a wash fluid reservoir (19) connected to said main line (2) via a fluid connection different from said reagent lines (8) into said main line (2) and discharging wash fluid into a waste compartment (13) of a cleaning container (11), wherein the waste compartment (13) is for receiving waste fluid and wherein the cleaning container (11) is connected to at least one reagent line (8) by said fluidic connector (15);
procedure II: drawing wash fluid from at least one fluid compartment (12) of at least one cleaning container (11) into said main line (2), wherein the fluid compartment (12) contains wash fluid and wherein the cleaning container (11) is connected to at least one reagent line (8) by said fluidic connector (15), and discharging wash fluid from said main line (2) into at least one waste compartment (13) for receiving waste fluid of said cleaning container (11) through said at least one reagent line (8);
procedure III: drawing wash fluid from at least one fluid compartment (12) of at least one first cleaning container (11) into said main line (2), wherein the fluid compartment (2) contains wash fluid and wherein the at least one first cleaning container (11) is connected to at least one first reagent line (8) and discharging wash fluid from said main line (2) into at least one waste compartment (13) of at least one second cleaning container (11), wherein the waste compartment (13) is for receiving waste fluid and wherein the at least one second cleaning container (11) is connected to at least one second reagent line (8) being different from said at least one first reagent line (8);
procedure IV: connecting at least one cleaning container (11) provided with at least one fluid compartment (12) containing wash fluid to at least one reagent line (8), drawing wash fluid from said fluid compartment (12) into said main line (2) and discharging wash fluid from said main line (2) through a waste fluid port (3) of said main line (2).

2. The process according to claim 1, wherein in each of procedures II and III plural wash fluids different with respect to each other contained in plural fluid compartments (12) are successively drawn into said main line (2).

3. The process according to procedures I to III of claim 1 or claim 2, wherein wash fluid is discharged through said sample intake (7).

4. The process according to procedures I to III of claim 1, claim 2 or claim 3, wherein at least one reagent container (9) connected to one reagent line (8) is automatically replaced with one cleaning container (11).

5. A fluidic system (1) for combining liquid samples with one or more reagents, said system (1) comprising:
a main line (2);
plural reagent lines (8) connected to said main line (2) for feeding reagents;
at least one sample intake (7) connected to said main line (2) for intaking samples;
at least one pressure actuator (5), adapted for generating a positive or negative pressure in said fluid lines;
one or more reagent containers (9), each of which being connected to one reagent line (8) by said fluidic connector (15);
at least one cleaning container (11) connected to at least one reagent line (8), the cleaning container (15) being provided with at least one waste compartment (13) for receiving waste fluid;
**characterised in that** said plural reagent lines are connectable to a reagent container (9) or a cleaning container (11) in an exchangeable manner by a fluidic connector (15);
further **characterised in that** in a first alternative said main line (2) is connected to a wash fluid reservoir (19) via a fluid connection different from the reagent lines (8) and said at least one cleaning container (11) is connected to at least one reagent line (8) by said fluidic connector (15); and **in that** in the first alternative the system (1) further comprises a controller (16), set up to draw wash fluid from said wash fluid reservoir (19) into said main line (2) and to discharge wash fluid from said main line (2) into said waste compartment (13);
further **characterised in that** in a second alternative the cleaning container (11) is provided with at least one fluid compartment (12) containing wash fluid; and **in that** in the second alternative the system (1) further comprises a controller (16), set up to draw wash fluid from said fluid compartment (12) through said at least one reagent line (8) into said main line (2) and to discharge wash fluid from said main line (2) through said at least one reagent line (8) into said waste compartment (13).

6. The fluidic system (1) according to claim 5, second alternative, wherein said main line (2) is connected to a wash fluid reservoir (19) containing wash fluid and wherein said controller (16) is set up to draw wash fluid from said wash fluid reservoir into said main line and to discharge wash fluid from said main line into at least one waste compartment (13).

7. The fluidic system (1) according to claim 5, second alternative, or 6, wherein said cleaning container (11) comprises plural fluid compartments (12) containing wash fluids different with respect to each other and wherein said controller (16) is set up to selectively draw said wash fluids into said main line (2).

8. The fluidic system (1) according to any one of the preceding claims 5 to 7, wherein said main line (2) is connected to a waste fluid port (3) and wherein said controller (16) is set up to discharge wash fluid through said waste fluid port (3).

9. The fluidic system (1) according to any one of the preceding claims 5 to 8, comprising an automated positioning mechanism (17), adapted for positioning individual containers (9, 11), wherein said controller (16) is set up to replace at least one reagent container (9) connected to one reagent line (8) with said cleaning container (11).

## Patentansprüche

1. Verfahren zum automatischen Waschen von Fluidleitungen (2, 7, 8) eines Fluidsystems (1) zum Kombinieren von Flüssigproben mit einem oder mehreren Reagenzien, wobei das System ausgestattet ist mit wenigstens einer Hauptleitung (2), die mit einer Mehrzahl Reagenzleitungen (8) zum Zuführen von Reagenzien verbunden ist, von denen jede mit einem Reagenzbehälter (9) oder einem Reinigungsbehälter (11) in einer austauschbaren Weise durch einen Fluidverbinder (15) verbindbar ist, wenigstens einer Probenaufnahme (7) zum Aufnehmen von Proben und wenigstens einem Druckaktuator (5) zum Erzeugen eines Über- oder Unterdrucks in den Fluidleitungen, wobei das Verfahren die Schritte einer oder mehreren Prozeduren umfasst, gewählt aus der Gruppe von Prozeduren, bestehend aus
Prozedur I: Ziehen von Waschfluid aus einem Waschfluidreservoir (19), das mit der Hauptleitung (2) über eine von den Reagenzleitungen (8) verschiedene Fluidverbindung verbunden ist, in die Hauptleitung (2) und Ausstoßen von Waschfluid in ein Abfallabteil (13) eines Reinigungsbehälters (11), wobei das Abfallabteil (13) zum Aufnehmen von Abfallfluid dient, und wobei der Reinigungsbehälter (11) durch den Fluidverbinder (15) mit wenigstens einer Reagenzleitung (8) verbunden ist;
Prozedur II: Ziehen von Waschfluid aus wenigstens einem Fluidabteil (12) wenigstens eines Reinigungsbehälters (11) in die Hauptleitung (2), wobei das Fluidabteil (12) Waschfluid enthält und wobei der Reinigungsbehälter (11) durch den Fluidverbinder (15) mit wenigstens einer Reagenzleitung (8) verbunden ist, und Ausstoßen von Waschfluid aus der Hauptleitung (2) durch die wenigstens eine Reagenzleitung (8) in wenigstens ein Abfallabteil (13) zum Aufnehmen von Abfallfluid des Reinigungsbehälters (11);
Prozedur III: Ziehen von Waschfluid aus wenigstens einem Fluidabteil (12) wenigstens eines ersten Reinigungsbehälters (11) in die Hauptleitung (2), wobei das Fluidabteil (12) Waschfluid enthält und wobei der wenigstens eine erste Reinigungsbehälter (11) mit wenigstens einer ersten Reagenzleitung (8) verbunden ist, und Ausstoßen von Waschfluid aus der Hauptleitung (2) in wenigstens ein Abfallabteil (13) wenigstens eines zweiten Reinigungsbehälters (11), wobei das Abfallabteil (13) zum Aufnehmen von Abfallfluid dient und wobei der wenigstens eine zweite Reinigungsbehälter (11) mit wenigstens einer zweiten Reagenzleitung (8) verbunden ist, die von der wenigstens einer ersten Reagenzleitung (8) verschieden ist;
Prozedur IV: Verbinden wenigstens eines Reinigungsbehälters (11), der mit wenigstens einem Waschfluid enthaltenden Fluidabteil (12) versehen ist, mit wenigstens einer Reagenzleitung (8), Ziehen von Waschfluid aus dem Fluidabteil (12) in die Hauptleitung (2) und Ausstoßen von Waschfluid aus der Hauptleitung (2) durch einen Abfallfluidport (3) der Hauptleitung (2).

2. Verfahren nach Anspruch 1, bei welchem in jeder der Prozeduren II und III mehrere voneinander verschiedene Waschfluide, die in mehreren Fluidabteilen (12) enthalten sind, nacheinander in die Hauptleitung (2) gezogen werden.

3. Verfahren gemäß den Prozeduren I bis III von Anspruch 1 oder Anspruch 2, bei welchem Waschfluid durch die Probenaufnahme (7) ausgeworfen wird.

4. Verfahren gemäß den Prozeduren I bis III von Anspruch 1, Anspruch 2 oder Anspruch 3, bei welchem wenigstens ein Reagenzbehälter (9), der mit einer Reagenzleitung (8) verbunden ist, durch einen Reagenzbehälter (11) automatisch ersetzt wird.

5. Fluidsystem (1) zum Kombinieren von Flüssigproben mit einem oder mehreren Reagenzien, welches System (1) umfasst:
eine Hauptleitung (2);
eine Mehrzahl Reagenzleitungen (8), die mit der Hauptleitung (2) verbunden sind, zum Zuführen von Reagenzien;
wenigstens eine Probenaufnahme (7), die mit der Hauptleitung (2) verbunden ist, zum Aufnehmen von Proben;
wenigstens ein Druckaktuator (5), geeignet zum Erzeugen eines Über- oder Unterdrucks in den Fluidleitungen;
ein oder mehrere Reagenzbehälter (9), von denen jeder mit wenigstens einer Reagenzleitung (8) durch den Fluidverbinder (15) verbunden ist;
wenigstens ein Reinigungsbehälter (11), der mit wenigstens einer Reagenzleitung (8) verbunden ist, wobei der Reinigungsbehälter (15) mit wenigstens einem Abfallabteil (13) zum Aufnehmen von Abfallfluid versehen ist;
**dadurch gekennzeichnet, dass** die Mehrzahl Reagenzleitungen (8) mit einem Reagenzbehälter (9) oder einem Reinigungsbehälter (11) in einer austauschbaren Weise durch einen Fluidverbinder (15) verbindbar sind;
ferner **dadurch gekennzeichnet, dass** in einer ersten Alternative die Hauptleitung (2) mit einem Waschfluidreservoir (19) über eine von den Reagenzleitungen (8) verschiedene Fluidverbindung verbunden ist und der wenigstens eine Reinigungsbehälter (11) durch den Fluidverbinder (15) mit wenigstens einer Reagenzleitung (8) verbunden ist; und dass in der ersten Alternative das System (1) weiterhin einen Kontroller (16) umfasst, der eingerichtet ist, Waschfluid aus dem Waschfluidreservoir (19) in die Hauptleitung (2) zu ziehen und Waschfluid aus der Hauptleitung (2) in das Abfallabteil (13) auszustoßen;
ferner **dadurch gekennzeichnet, dass** in einer zweiten Alternative der Reinigungsbehälter (11) mit wenigstens einem Waschfluid enthaltenden Fluidabteil (12) versehen ist; und dass in der zweiten Alternative das System (1) weiterhin einen Kontroller (16) umfasst, der eingerichtet ist, Waschfluid aus dem Fluidabteil (12) durch die wenigstens eine Reagenzleitung (8) in die Hauptleitung (2) zu ziehen und Waschfluid aus der Hauptleitung (2) durch die wenigstens eine Reagenzleitung (8) in das Abfallabteil (13) auszustoßen.

6. Fluidsystem nach Anspruch 5, zweite Alternative, bei welchem die Hauptleitung (2) mit einem Waschfluid enthaltenden Waschfluidreservoir (19) verbunden ist, und wobei der Kontroller (16) eingerichtet ist, Waschfluid aus dem Waschfluidreservoir in die Hauptleitung zu ziehen und Waschfluid aus der Hauptleitung in wenigstens ein Abfallabteil (13) auszustoßen.

7. Fluidsystem nach Anspruch 5, zweite Alternative, oder 6, bei welchem der Reinigungsbehälter (11) eine Mehrzahl Fluidabteile (12) umfasst, welche voneinander verschiedene Waschfluide enthalten, und wobei der Kontroller (16) eingerichtet ist, die Waschfluide selektiv in die Hauptleitung (2) zu ziehen.

8. Fluidsystem nach einem der vorherigen Ansprüche 5 bis 7, bei welchem die Hauptleitung (2) mit einem Abfallfluidport (3) verbunden ist und wobei der Kontroller (16) eingerichtet ist, Waschfluid durch den Abfallfluidport (3) auszustoßen.

9. Fluidsystem nach einem der vorherigen Ansprüche 5 bis 8, mit einem automatischen Positionierungsmechanismus (17), der zum Positionieren einzelner Behälter (9, 11) geeignet ist, wobei der Kontroller (16) eingerichtet ist, wenigstens einen Reagenzbehälter (9), der mit einer Reagenzleitung (8) verbunden ist, durch einen Reinigungsbehälter (11) zu ersetzen.

## Revendications

1. Procédé pour le lavage automatique des lignes fluidiques (2, 7, 8) d'un système fluidique (1) pour combiner des échantillons liquides avec un ou plusieurs réactifs, ledit système étant muni d'au moins une ligne principale (2) reliée à une pluralité de lignes de réactifs (8) pour approvisionner des réactifs, dont chacune peut être reliée à un récipient de réactifs (9) ou un récipient de nettoyage (11) de manière interchangeable par un connecteur fluidique (15), au moins un point d'admission d'échantillons (7) pour l'admission des échantillons et au moins un vérin de pression (5) pour générer une pression positive ou négative dans lesdites lignes fluides, ledit procédé comprenant les étapes d'une ou plusieurs procédures sélectionnées parmi le groupe des procédures consistant en :
procédure I: tirage de liquide de lavage dans ladite ligne principale (2) depuis un réservoir de liquide de lavage (19) relié à ladite ligne principale (2) à travers une connexion fluidique différente desdites lignes de réactifs (8) et
décharge du liquide de lavage dans un compartiment à déchets (13) d'un récipient de nettoyage (11), où le compartiment à déchets (13) est conçu pour accueillir les déchets fluidiques et où le récipient de nettoyage (11) est relié à au moins une ligne de réactifs (8) par ledit connecteur fluidique (15) ;
procédure II : tirage de liquide de lavage dans ladite ligne principale (2) à partir d'au moins un compartiment à fluides (12) d'au moins un récipient de nettoyage (11), où le compartiment à fluides (12) contient du liquide de lavage et où le récipient de nettoyage (11) est relié à au moins une ligne de réactifs (8) par ledit connecteur fluidique (15), et décharge de liquide de lavage à partir de ladite ligne principale (2) dans au moins un compartiment à déchets (13) conçu pour accueillir des déchets liquides dudit récipient de nettoyage (11), à travers ladite au moins une ligne de réactifs (8) ;
procédure III : tirage de liquide de lavage dans ladite ligne principale (2) à partir d'au moins un compartiment à fluides (12) d'au moins un premier récipient de nettoyage (11), où le compartiment à fluides (12) contient du liquide de lavage et où le au moins un premier récipient de nettoyage (11) est relié à au moins une première ligne de réactifs (8) et décharge de liquide de lavage à partir de ladite ligne principale (2) dans au moins un compartiment à déchets (13) d'au moins un second récipient de nettoyage (11), où le compartiment à déchets (13) est conçu pour accueillir des déchets liquides et où au moins un second récipient de nettoyage (11) est relié à au moins une seconde ligne de réactifs (8) étant différente de ladite au moins une première ligne de réactifs (8) ;
procédure IV : connexion d'au moins un récipient de nettoyage (11) muni d'au moins un compartiment à fluides (12) contenant du liquide de lavage à au moins une ligne de réactifs (8), tirage du fluide de lavage liquide à partir dudit compartiment à fluides (12) dans ladite ligne principale (2) et décharge de liquide de lavage à partir de ladite ligne principale (2) à travers un port à déchets fluides (3) de ladite ligne principale (2).

2. Le procédé selon la revendication 1, où dans chacune des procédures II et III plusieurs fluides de lavage différents les uns des autres contenus dans plusieurs compartiments à fluides (12) sont successivement tirés dans ladite ligne principale (2).

3. Le procédé selon les procédures I à III de la revendication 1 ou la revendication 2, où le liquide de lavage est déchargé à travers ledit point d'admission d'échantillons (7).

4. Le procédé selon des procédures I à III de la revendication 1, la revendication 2 ou la revendication 3, où au moins un récipient de réactifs (9) relié à une ligne de réactifs (8) est automatiquement remplacé avec un récipient de nettoyage (11).

5. Un système fluidique (1) permettant de combiner des échantillons liquides avec un ou plusieurs réactifs, ledit système (1) comprenant :
une ligne principale ;
plusieurs lignes de réactifs (8) reliées à ladite ligne principale (2) pour l'approvisionnement des réactifs ;
au moins un point d'admission d'échantillons (7) relié à ladite ligne principale (2) pour l'admission des échantillons;
au moins un vérin de pression (5), adapté pour générer une pression positive ou négative dans lesdites lignes fluides ;
un ou plusieurs récipients de réactifs (9), dont chacun étant relié à la ligne de réactifs (8) par ledit connecteur fluidique (15) ;
au moins un récipient de nettoyage (11) relié à au moins une ligne de réactifs (8), le récipient de nettoyage (15) étant muni d'au moins un compartiment à déchets pour l'accueil de déchets liquides :
caractérisé en que lesdites plusieurs lignes de réactifs peuvent être reliées à un récipient de réactifs (9) ou un récipient de nettoyage (11) de manière interchangeable par un connecteur (15) fluidique ;
**caractérisé en outre en ce que** dans une première variante ladite ligne principale (2) est reliée à un réservoir de liquide de lavage (19) à travers une connexion fluidique autre que les lignes de réactifs (8) et ledit au moins un récipient de nettoyage (11) est relié à au moins une ligne de réactifs (8) par ledit connecteur fluidique (15) ; et **en ce que** dans la première variante, le système (1) comprend en outre un régulateur (16) préparé pour tirer du liquide de lavage dudit réservoir de liquide de lavage (19) dans ladite ligne principale (2) et pour décharger du liquide de lavage de ladite ligne principale (2) dans ledit compartiment à déchets (13) ;
**caractérisé en outre en ce que** dans une deuxième variante, le récipient de nettoyage, (11) est muni d'au moins un compartiment à fluides (12) contenant du liquide de lavage ; et **en ce que** dans la deuxième variante le système (1) comprend en outre un régulateur (16) configuré pour tirer des liquides de lavage dudit compartiment à fluides (12) dans ladite ligne principale (2) et de décharger le liquide de lavage de ladite ligne principale (2) à travers ladite au moins une ligne de réactifs (8) dans ledit compartiment à déchets (13).

6. Le système fluidique (1) selon la revendication 5, deuxième variante, où ladite ligne principale (2) est reliée à un réservoir de liquide de lavage (19) contenant du liquide de lavage et où ledit régulateur (16) est configuré pour tirer du liquide de lavage depuis ledit réservoir de fluides, dans ladite ligne principale (2) et pour décharger du liquide de lavage de ladite ligne principale dans au moins un compartiment a déchets (13).

7. Le système fluidique (1) selon la revendication 5, deuxième alternative ou la revendication 6, où ledit récipient de nettoyage (11) comprend plusieurs compartiments à fluides (12) contenant des liquides de lavage différents les uns par rapport aux autres et où ledit régulateur (16) est configuré pour tirer sélectivement lesdits fluides de lavage dans ladite ligne principale (2).

8. Le système fluidique (1) selon l'une quelconque des revendications précédentes 5 à 7, où ladite ligne principale (2) est reliée à un port de déchets fluidiques (3) et où ledit régulateur (16) est configuré pour décharger du liquide de lavage par ledit port de déchets fluidiques (3).

9. Le système fluidique (1) selon l'une quelconque des revendications précédentes 5 à 8, comprenant un mécanisme de positionnement automatisé (17), adapté pour le positionnement des récipients individuels (9, 11), où ledit régulateur (16) est configuré pour remplacer au moins un récipient de réactifs (9) relié à une ligne de réactifs (8) avec ledit récipient de nettoyage (11).
